# EUROPÄISCHE PATENTSCHRIFT

(11) **EP 3 797 074 B1**
(45) Veröffentlichungstag und Bekanntmachung des Hinweises auf die Patenterteilung: **22.01.2025**
(21) Anmeldenummer: 19715448.7
(22) Anmeldetag: 01.04.2019
(51) Int. Cl.: B05B 11/00, B65D 1/08, B65D 1/32, B65D 47/20, G01F 11/08

(54) **ABGABEKOPF UND ABGABEVORRICHTUNG ZUR DOSIERTEN ABGABE FLÜSSIGER PRÄPARATE SOWIE VERWENDUNGSMÖGLICHKEITEN**
DISPENSING HEAD AND DISPENSING DEVICE FOR THE METERED DISPENSING OF LIQUID PREPARATIONS, AND POSSIBLE USES
TÊTE DE DISTRIBUTION ET DISPOSITIF DE DISTRIBUTION POUR LA DISTRIBUTION DOSÉE DE PRÉPARATIONS LIQUIDES ET LEURS UTILISATIONS POSSIBLES

(30) Priorität: 23.05.2018 DE 102018208110
(43) Veröffentlichungstag der Anmeldung: 31.03.2021
(73) Patentinhaber: F. Holzer GmbH, 66386 St. Ingbert (DE)
(72) Erfinder: LEE, Hyeck-Hee, 66386 St. Ingbert (DE); STEINFELD, Ute, 66386 St. Ingbert (DE); MAHLER, Markus, 66333 Völklingen (DE); HOLZER, Frank, 66386 St. Ingbert (DE)
(74) Vertreter: Pfenning, Meinig & Partner mbB
(86) Internationale Anmeldenummer: PCT/EP2019/058171
(87) Internationale Veröffentlichungsnummer: WO 2019/223922

(56) Entgegenhaltungen:
- EP-A1- 1 213 003
- WO-A1-2018/010889
- DE-U1- 20 209 615
- DE-U1- 29 714 031
- US-A- 2 761 591

## Beschreibung

Die vorliegende Erfindung betrifft einen Abgabekopf für eine Abgabevorrichtung bzw. eine mit dem Abgabekopf versehene Abgabevorrichtung zur dosierten Abgabe flüssiger Präparate. Der Abgabekopf umfasst dabei ein spezielles Ventil, das mindestens eine Dichtlippe umfasst, mit der eine im Abgabekopf eingebrachter Durchgangskanal, zur Abgabe des flüssigen Präparats , verschlossen werden kann. Die vorliegende Erfindung zeichnet sich dabei durch die Einfachheit des Abgabekopfs und die damit verbundenen ökonomischen Vorteile bei der Herstellung aus.

Die WO 2018/010889 betrifft einen Pumpkopf, der eine dosierte Abgabe von Fluiden ermöglicht sowie eine Dosiervorrichtung, die beispielsweise als Quetschflasche ausgebildet sein kann, wobei die Dosiervorrichtung einen entsprechend ausgebildeten Pumpkopf umfasst. Der dort beschriebene Pumpkopf ist allerdings nicht hinreichend druckempfindlich, so dass die gezielte dosierte Abgabe eines bestimmten Volumens eines zu dosierenden Fluids erschwert ist. Darüber hinaus sind die Dokumente US2761591A, EP1213003A1, DE20209615U1 und DE29714031U1 bekannt.

Die Aufgabe der vorliegenden Erfindung ist es, einen Abgabekopf für eine Abgabevorrichtung zur dosierten Abgabe flüssiger Präparate bzw. eine entsprechende Abgabevorrichtung anzugeben, der möglichst druckempfindlich ist und somit die Abgabe einer genau dosierten Quantität eines abzugebenden Fluids - insbesondere Flüssigkeiten mit niedriger Oberflächenspannung, wie z.B. wässrige Lösungen - erleichtert. Der Abgabekopf soll zudem ein möglichst einfach beschaffenes Ventil aufweist. Diese Aufgabe wird betreffend einen Abgabekopf mit den Merkmalen des Patentanspruchs 1, bezüglich einer Abgabevorrichtung mit den Merkmalen des Patentanspruchs 12 gelöst. In Patentanspruch 15 sind Verwendungsmöglichkeiten der Abgabevorrichtung angegeben.

Die vorliegende Erfindung betrifft somit einen Abgabekopf gemäß Anspruch 1 für eine Abgabevorrichtung zur dosierten Abgabe flüssiger Präparate, umfassend einen Durchgangskanal, der eine innenseitig angeordnete Eintrittsöffnung und eine äußere Abgabeöffnung für flüssige Präparate aufweist, wobei die Eintrittsöffnung über den Durchgangskanal einen Innenraum mit einer äußeren Umgebung verbindet, sowie ein Ventil, umfassend einen Ventilkörper, der auf der Seite des Innenraums über der Eintrittsöffnung angeordnet ist und die Eintrittsöffnung gegenüber einem Innenraum für das flüssige Präparat reversibel dichtend verschließbar ausgebildet ist, wobei der Ventilkörper mindestens eine Dichtlippe aufweist, die auf einer der Eintrittsöffnung zugewandten Seite des Ventilkörpers ausgebildet ist und den Innenraum gegenüber der Eintrittsöffnung abdichtet, wenn der Ventilkörper die Eintrittsöffnung verschließt.

Der Abgabekopf verfügt somit über einen Durchgangskanal, mit dem zu dosierendes flüssiges Präparat von einer Innenseite (auf der das Ventil angeordnet ist) auf die Außenseite abgegeben werden kann. Der Abgabekopf umfasst für diesen Zweck einen Durchgangskanal, der eine innenseitig angeordnete Eintrittsöffnung und eine äußere Abgabeöffnung aufweist. Das Ventil ist dabei derart ausgebildet, dass es in manchen Betriebszuständen des Abgabekopfs selbsttätig die Eintrittsöffnung des Durchgangskanals (und somit den kompletten Durchgangskanal) verschließen kann.

Der Ventilkörper weist erfindungsgemäß mindestens eine Dichtlippe auf, mit der es ermöglicht wird, die Eintrittsöffnung des Durchgangskanals effektiv zu verschließen. Der Ventilkörper selbst ist dabei beweglich gegenüber der Eintrittsöffnung ausgebildet, so dass es in einem geöffneten Zustand des Ventils möglich ist, dass zu dosierende flüssiges Präparat in die Eintrittsöffnung und somit in den Durchgangskanaleintritt und über die Abgabeöffnung nach außen abgegeben werden kann.

Das erfindungsgemäße Ventil ermöglicht es somit, dass das abzugebende Fluid, für den Fall, dass der Ventilkörper gar nicht oder mit einer hinreichend kleinen Andruckkraft durch das abzugebende Fluid auf die Eintrittsöffnung des Durchgangskanals gepresst wird, zwischen dem Abgabekopf und der mindestens einen bzw. der mehreren Dichtlippen hindurchtreten kann. Für den Fall, dass der Druck auf den Ventilkörper (beispielsweise über das abzugebende Fluid) erhöht wird, oder für den beispielhaften Fall, dass eine Druckerhöhung eintritt, wird der Ventilkörper mit der daran angeordneten mindestens einen Dichtlippe hinreichend kräftig an den Abgabekopf angedrückt und verschließt somit zuverlässig die Eintrittsöffnung des Durchgangskanals. In diesem Betriebszustand ist der Durchgangskanal durch das Ventil verschlossen.

Das Ventil ist somit geöffnet, wenn kein Druck auf die Quetschflasche ausgeübt wird; es besteht dann ein enger Spalt zwischen der mindestens einen Dichtlippe des Ventilkörpers und der Wandung des Abgabekopfs. Der Spalt ist dabei allerdings so klein bemessen, dass kein Fluid austreten kann, selbst wenn die Dosiervorrichtung mit dem erfindungsgemäßen Abgabekopf mit der Auslassöffnung nach unten positioniert ist (z.B. bei Transport oder Lagerung der Dosiervorrichtung in entsprechender Positionierung, wie beispielsweise in einer Handtasche oder in einer Hosentasche). Dies ist auf die Oberflächenspannung des Fluids und dem kleinen Abstands zwischen Ventil und Wandung des Abgabekopfs zurückzuführen. Die Abgabe des zu dosierenden Fluids erfolgt durch Ausüben eines Drucks auf das im Inneren der Dosiervorrichtung befindlichen Fluids, beispielsweise indem Druck auf eine Quetschflasche ausgeübt wird. Hierbei erfolgt die Abgabe des Fluids in dosierter Weise, bis ein Verschluss des Ventils erfolgt. Das Ventil wird durch Druck auf die Quetschflasche und nach Abgabe des definierten Dosiervolumens geschlossen, indem ein fluidischer Verschluss des Auslasskanals stattfindet, selbst wenn der Druck weiter anhält.

Bei Lagerung der Dosiervorrichtung nach unten (d.h. wenn das Ventil oberhalb des Durchgangskanals angeordnet ist) kann aufgrund der Tatsache, dass das Ventil geöffnet ist, das zu dosierende Fluid in den Durchgangskanal einströmt. Bei Betätigung der Dosiervorrichtung (d.h. für den Fall, dass Druck auf das bevorratete Fluid ausgeübt wird, indem z.B. eine Quetschflasche gedrückt wird) erfolgt dann bis zum Verschluss des Durchgangskanals durch das Ventil eine dosierte Abgabe des Fluids. Die dosierte Menge Fluid wird damit durch einen Dosierhub des Ventils definiert.

Wenn Luft zwischen dem Ventil und der Flüssigkeit ist, also z.B. bei Lagerung der Dosiervorrichtung nach oben (d.h. wenn das Ventil unterhalb des Durchgangskanals angeordnet ist), ist im Durchgangskanal lediglich Luft vorhanden, da die Flüssigkeit schwerkraftbedingt zurück in das Vorratsbehältnis strömt. Somit tritt bei Ausüben von Druck nur eine Hubmenge Luft aus.

Die vorliegende Erfindung zeichnet sich insbesondere durch die Einfachheit des Ventils aus, das beispielsweise einstückig ausgebildet und in den Abgabekopf eingesetzt werden kann. Hierbei sind keine weiteren Befestigungsmittel für das Ventil notwendig, ebenso kann sowohl der Abgabekopf als auch das Ventil aus einem einzigen Material gefertigt werden, so dass Fremdmaterialien, wie beispielsweise Metalle oder aufwendige mechanische Konstruktionen überflüssig werden.

Gemäß einer bevorzugten Ausführungsform umfasst der Ventilkörper mindestens zwei Dichtlippen, eine innere Dichtlippe und äußere Dichtlippe.

Weiter bevorzugt ist es, dass die mindestens eine Dichtlippe, insbesondere die innere Dichtlippe und äußere Dichtlippe, konzentrisch am Ventilkörper angeordnet sind. Durch die konzentrische Ausbildung kann beispielsweise die ebenso im Durchschnitt kreisförmig ausgebildete Eintrittsöffnung für den (ggf. ebenfalls ebenso kreisförmig ausgebildeten Durchgangskanal sicher umschlossen und somit gegenüber dem Innenraum abgeschichtet werden. Insbesondere für die Herstellung des Ventils ist es vorteilhaft, wenn der Ventilkörper und die mindestens eine Dichtlippe einstückig ausgebildet sind. Weiterhin ist es bevorzugt, wenn die mindestens eine Dichtlippe eine in Richtung der Eintrittsöffnung ausgebildete Höhe von 0,05 bis 1 mm, bevorzugt 0,1 bis 0,5 mm aufweist.

Beispielsweise kann die mindestens eine Dichtlippe (7a, 7b) eine Breite von 0,05 bis 1 mm, bevorzugt 0,1 bis 0,4 mm aufweisen.

Weiter bevorzugt ist es, wenn der sowie die mindestens eine Dichtlippe aus einem thermoplastischen oder elastomeren Kunststoff gebildet sind, insbesondere aus einem Polyolefin, wie z.B. Polyethylen, Polypropylen, Polystyrol oder einem Polyamid, wie z.B. PA6, PA66, PA12.

Erfindungsgemäß ist vorgesehen, dass das Ventil einen Rahmen umfasst, der über mindestens ein Befestigungselement verfügt, an dem der Ventilkörper fixiert ist, wobei der Rahmen am Abgabekopf befestigt ist.

Es ist vorgesehen, dass der Ventilkörper, der Rahmen sowie das mindestens eine Befestigungselement einstückig ausgebildet sind.

Weiter bevorzugt ist es bei der zuvor genannten Ausführungsform, wenn der Abgabekopf eine Aussparung aufweist, in die der Rahmen mit Ventilkörper kraft- und/oder formschlüssig eingepasst ist.

Eine weitere bevorzugte Ausführungsform sieht vor, dass das Ventil in einer Aussparung des Abgabekopfs lose aufgenommen ist und in der Aussparung vertikal beweglich ausgebildet ist.

Bei der zuvor genannten Ausführungsform ist es insbesondere von Vorteil, wenn der Ventilkörper so bemessen ist, dass das flüssige Präparat zwischen Ventilkörper und einer die Aussparung begrenzenden Wandung durchströmen kann.

Insbesondere für den Fall, dass der Ventilkörper lose in die Aussparung eingesetzt ist, ist es bevorzugt, das Ventil bzw. den Ventilkörper zu sichern. Gemäß dieser bevorzugten Ausführungsform ist vorgesehen, dass die Aussparung eine Begrenzung aufweist, die ein vollständiges vertikales Herausführen des Ventils aus der Aussparung verhindert.

Weiter bevorzugt ist, dass der Ventilkörper einen Führungsfortsatz aufweist, der in den Durchgangskanal eingreift und einen kleineren Querschnitt als der Durchgangskanal aufweist.

Insbesondere kann hierbei von Vorteil sein, wenn Führungsfortsatz und Ventilkörper einstückig ausgebildet sind.

Die vorliegende Erfindung betrifft zudem eine Abgabevorrichtung zur dosierten Abgabe flüssiger Präparate, umfassend einen Abgabekopf nach einem der vorhergehenden Ansprüche, sowie ein flexibles Vorratsbehältnis, wobei der Abgabekopf fluidisch dicht auf dem Vorratsbehältnis montiert ist.

Das Vorratsbehältnis ist hierbei insbesondere als eine mittels Druck betätigbare Quetschflasche ausgebildet.

Das Vorratsbehältnis kann hierbei aus einem Material, ausgewählt aus der Gruppe bestehend aus thermoplastischen Kunststoffen und elastomeren Kunststoffen, insbesondere aus einem Polyolefin, wie z.B. Polyethylen, Polypropylen, Polystyrol oder einem Polyamid, wie z.B. PA6, PA66, PA12 gebildet sein.

Die Erfindung betrifft des Weiteren die Verwendung einer zuvor genannten erfindungsgemäßen Abgabevorrichtung. Die Verwendungsmöglichkeiten sind hierbei erfindungsgemäß die Bevorratung und/oder dosierten Abgabe von ophthalmischen Produkten, insbesondere Augentropfen; rhinologischen Produkten, insbesondere Nasentropfen, Fluiden, Gelen, Cremes, Pasten, Nahrungsmitteln und Nahrungsergänzungsmitteln.

Die vorliegende Erfindung wurde anhand der nachfolgenden Figuren und Ausführungen näher beleuchtet, ohne die Erfindung auf die dargestellten speziellen Sachverhalte zu beschränken.

### Hierbei zeigen:

- Figur 1:: eine erste erfindungsgemäße Ausführungsform eines Abgabekopfs bzw. eine Abgabevorrichtung in geöffnetem Zustand
- Figur 2a:: die Abgabevorrichtung gemäß der ersten Ausführungsform - nach erfolgter Abgabe des Dosiervolumens und damit Verschluss des Ventils
- Figur 2b:: die Abgabevorrichtung gemäß der ersten Ausführungsform im Druckausgleichszustand, d.h. beim Ausgleich der Saugspannung in der Quetschflasche durch Lufteinstrom
- Figur 3:: eine zweite erfindungsgemäße Ausführungsform einer Abgabevorrichtung in geöffnetem Zustand
- Figur 4a:: die Abgabevorrichtung gemäß der zweiten Ausführungsform nach erfolgter Abgabe des Dosiervolumens und damit Verschluss des Ventils
sowie
- Figur 4b:: die Abgabevorrichtung gemäß der zweiten Ausführungsform im Druckausgleichszustand, d.h. beim Ausgleich der Saugspannung in der Quetschflasche durch Lufteinstrom

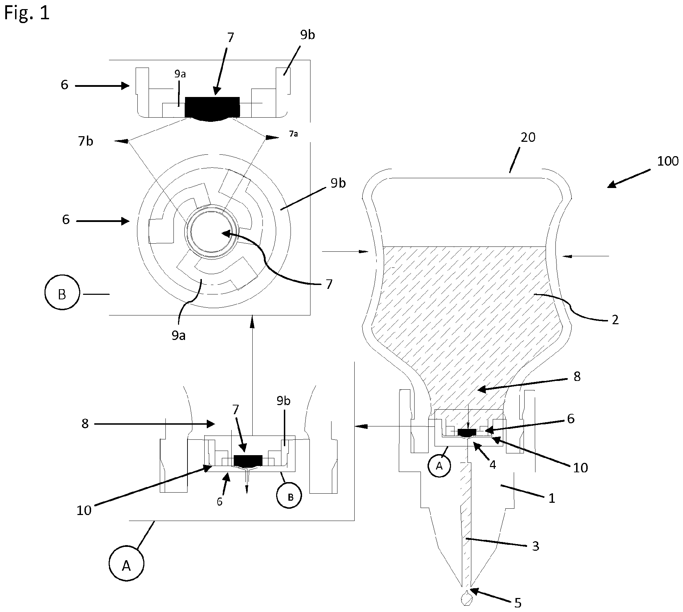

Figur 1 zeigt eine erste Ausführungsform einer Abgabevorrichtung 100 gemäß der vorliegenden Erfindung, die einen erfindungsgemäßen Abgabekopf 1 umfasst. In Figur 1 rechts dargestellt ist die gesamte Abgabevorrichtung 100 in dem Zustand, in dem eine dosierte Abgabe eines in einem Vorratsbehältnis 20 bevorrateten Fluids 2 erfolgt. Das Vorratsbehältnis 20 ist hierbei mit einem erfindungsgemäßen Abgabekopf 1, beispielsweise über einen Schnappverschluss oder eine andere mechanische Befestigung verbunden. Der Abgabekopf verfügt dabei über eine Abgabeöffnung 5, über die flüssiges Präparat 2 abgegeben werden kann. Die Abgabeöffnung 5 kommuniziert über einen Durchgangskanal 3 mit einer Eintrittsöffnung 4, über die flüssiges Präparat 2 aus einem Innenraum 8 über den Durchgangskanal 3 in Richtung der Abgabeöffnung 5 gelangen kann.

Das Bevorratungsgefäß 20 ist hierbei insbesondere als Quetschflasche ausgebildet, die über Druck (siehe in Figur 1 rechts dargestellte Pfeile) gequetscht und somit betätigt werden kann.

Das Ventil 6, das die Eintrittsöffnung 4 des Durchgangskanals 3 reversibel verschließen kann, ist in detaillierter Ausführung im Ausschnitt A (Figur 1, links unten) dargestellt. Eine weitere vergrößerte Darstellung des Ventils 6 ist im Ausschnitt B ersichtlich, der selektiv das Ventil 6 in einer seitlichen Schnitzzeichnung (Ausschnitt B, oben) sowie in einer perspektivischen Aufsicht (Ausschnitt B, unten) zeigt.

Das Ventil 6 verfügt hierbei über einen Ventilkörper 7, der an seiner Unterseite (d.h. der Seite, die der Eintrittsöffnung 4 des Durchgangskanals 3 zugewandt ist) zwei konzentrische Dichtlippen 7a, 7b aufweist. Bei hohem Druck wird zunächst die das Dosiervolumen abgegeben. Nach Abgabe des definierten Volumens wird das Ventil 6 durch den zunehmenden Druck dann verschlossen. Durch den auf die Quetschflasche ausgeübten Druck wird der Ventilkörpers 7 auf die Eintrittsöffnung 4 des Durchgangskanals 3 insbesondere über die Dichtlippen 7a, 7b aufgedrückt und es erfolgt ein fluidischer Verschluss, in dem eine für das Fluid 2 temporär undurchdringliche Barriere zwischen der Wandung des Abgabekopfs 1, an die der Ventilkörper 7 angepresst wird, und der Eintrittsöffnung 4 des Durchgangskanals 3 ausgebildet wird. Dies ist im Gegensatz zu herkömmlichen Quetschflaschen, bei keine dosierte Abgabe erfolgt, sondern die Abgabe erste gestoppt wird, wenn der Druck auf die Quetschflache beendet wird. Somit kann das Abgabevolumen unabhängig vom auf die Quetschflasche ausgeübten Druck und damit immer gleich dosiert werden.

Im Beispielsfalle der Figur 1 ist das Ventil 6 dabei derart ausgebildet, dass der Ventilkörper 7 (mit daran befindlichen Dichtlippen 7a, 7b) über Haltearme 9a an einem Rahmen 9b befestigt ist. Sämtliche der zuvor genannten Bestandteile bilden das Ventil 6. Dieses Ventil 6 kann in eine für die Aufnahme dieses Ventils 6 vorgesehene Aufnahmeöffnung 10 im Abgabekopf 1 eingesetzt werden und darin (beispielsweise lediglich über entsprechende dimensionale Ausgestaltung der Aufnahmeöffnung 10 im Abgabekopf und des Ventils 6) darin befestigt werden, ohne dass es notwendig wäre, zusätzliche mechanische Mittel zur Befestigung des Ventils 6 im Abgabekopf 1 zu verwenden.

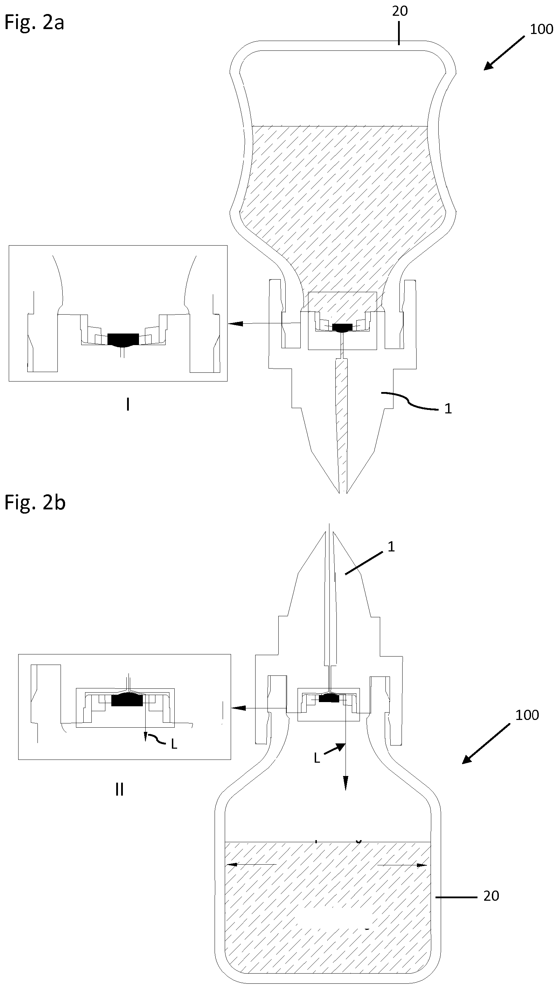

In Figur 2a ist die Abgabevorrichtung 100, wie auch in Figur 1 bereits dargestellt, gezeigt. Der Übersichtlichkeit halber sind nicht sämtliche Bezugszeichen der an und für sich gleichen Bestandteile in Figur 2 aufgelistet. Im Detail I ist der Zustand dargestellt, in dem der Ventilkörper 7 vollständig an die Eingangsöffnung 4 des Durchgangskanals 3 angepresst ist und somit der Durchgangskanal 3 vom Ventilkörper 7 verschlossen ist.

Figur 2b zeigt den Zustand des Druckausgleichs, d.h. wenn die Abgabevorrichtung 100, nach erfolgter Abgabe, in einen Aufbewahrungszustand versetzt wird. Hierbei wird die Abgabevorrichtung auf den Boden des Vorratsbehältnisses 20 gestellt. Es erfolgt eine reversible Ausdehnung der Quetschflasche 20, zuvor in Form von Flüssigkeit 2 abgegebenes Volumen wird hierbei durch Luft L ersetzt (im Detail II dargestellt), die über den Durchgangskanal 3 in den Innenraum 8 einströmen kann. Es erfolgt somit ein Druckausgleich im Inneren durch Ansaugen von Luft. Es spielt dabei keine Rolle in welcher Position die Quetschflasche sich befindet.

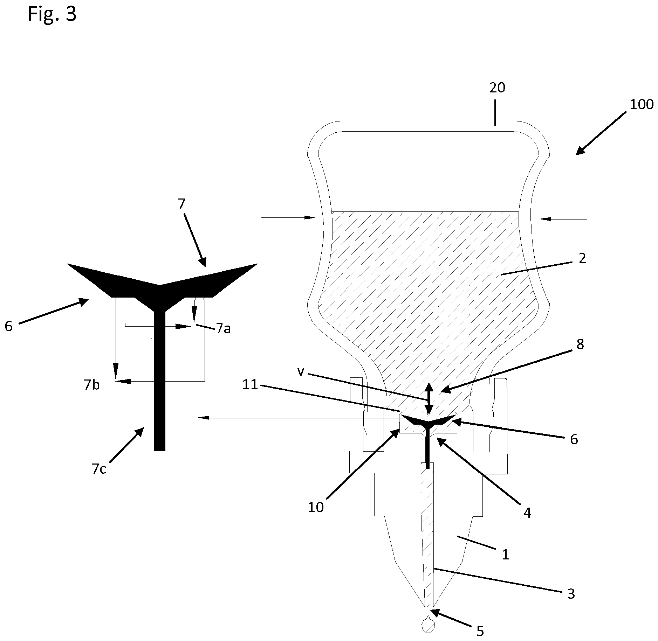

Figur 3 zeigt eine alternative Ausgestaltung eines erfindungsgemäßen Abgabekopfs 1 mit einem alternativen Ventil 6. Im Falle der Figur 3 verfügt das Ventil 6 über einen Ventilkörper 7, an den - ansonsten in Analogie zum Ventil 6 gemäß Figur 1 - zwei untenseitig angeordnete Dichtlippen 7a und 7b angeordnet sind. Zusätzlich verfügt der Ventilkörper 7 über einen Führungsfortsatz 7c. Das Ventil 6 ist hierbei in eine Aufnahmeöffnung 10 des Abgabekopfs 1 aufgenommen und dort vertikal (angedeutet auf die Pfeile durch den Pfeil v) beweglich. Die Aufnahmeöffnung 10 verfügt über eine Begrenzung 11, die beispielsweise in Form einer Auskragung und/oder einer Verengung der Öffnung 10 ausgebildet sein kann, um zu verhindern, dass das Ventil 6 im Betriebszustand bzw. in dem Zustand, in dem die Dosiervorrichtung kopfüber auf den Boden der Quetschflasche 20 gestellt wird, aus der Aufnahmeöffnung 10 herausfüllt.

Der Ventilkörper 7 ist hierbei so gemessen, dass zwischen der Wandung der Aufnahmeöffnung 10 und den Spitzen des Ventilkörpers 7 zu jedem Zeitpunkt Fluid 2 in Richtung der Eingangsöffnung 4 bzw. dem Durchgangskanal 3 strömen kann.

Der im beispielhaften Falle der Figur 3 dargestellte Führungsfortsatz 7c ist dabei derart ausgebildet, dass Ventil 6 in einer horizontalen Position bezüglich des Durchgangskanals 3 bzw. der Eingangsöffnung 4 zu sichern, so dass stets eine zuverlässige Abdichtung der Eingangsöffnung 4 über die Dichtlippen 7a, 7b gewährleistet ist.

Die Funktionsweise des Ventils 6, insbesondere was die Drücke zum reversiblen Verschließen der Eingangsöffnung 4 anbelangt, ist im übrigen identisch zu den Ausführung zu Figur 1.

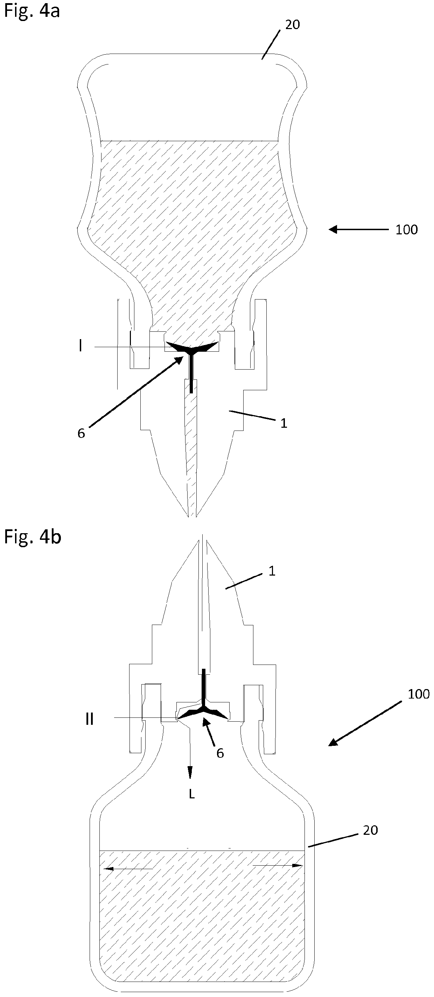

Figur 4a zeigt die Abgabevorrichtung 100 - in analoger Weise zur Figur 2a - in einem Zustand I, in dem über das Ventil 6 die Eintrittsöffnung 4 des Durchgangskanals 3 vollständig verschlossen ist. Dieser Zustand tritt ein, wenn hinten reichend hohe Drücke auf die Quetschflasche 20 ausgeübt werden.

Figur 4b zeigt die Abgabevorrichtung 100 in einem Zustand II in dem zuvor abgegebenes Volum des flüssigen Präparats 2 durch Luft L ersetzt wird und die Quetschflasche 20 in den ursprünglichen Zustand zurückkehrt (siehe angedeutete Pfeile).

## Patentansprüche

1. Abgabekopf (1) für eine Abgabevorrichtung (100) zur dosierten Abgabe flüssiger Präparate (2), umfassend
einen Durchgangskanal (3), der eine innenseitig angeordnete Eintrittsöffnung (4) und eine äußere Abgabeöffnung (5) für flüssige Präparate aufweist, wobei die Eintrittsöffnung derart ausgebildet ist, dass sie über den Durchgangskanal (3) einen Innenraum (8) mit einer äußeren Umgebung verbindet, sowie ein Ventil (6), umfassend einen Ventilkörper (7), der auf der Seite des Innenraums (8) über der Eintrittsöffnung (4) angeordnet ist und die Eintrittsöffnung (4) gegenüber einem Innenraum (8) für das flüssige Präparat (3) reversibel dichtend verschließbar ausgebildet ist.
**dadurch gekennzeichnet, dass**
der Ventilkörper (7) mindestens eine Dichtlippe (7a, 7b) aufweist, die auf einer der Eintrittsöffnung (4) zugewandten Seite des Ventilkörpers (7) ausgebildet ist und wobei die Dichtlippe (7a, 7b) derart ausgebildet ist, dass sie den Innenraum (8) gegenüber der Eintrittsöffnung (4) abdichtet, wenn der Ventilkörper (7) die Eintrittsöffnung (4) verschließt, wobei
das Ventil (6) einen Rahmen (9b) umfasst, der über mindestens ein Befestigungselement (9a) verfügt, an dem der Ventilkörper (7) fixiert ist, wobei der Rahmen (9b) am Abgabekopf (1) befestigt ist, wobei bevorzugt der Ventilkörper (7), der Rahmen (9b) sowie das mindestens eine Befestigungselement (9a) einstückig ausgebildet sind, und das Ventil (6) derart ausgebildet ist, dass der Ventilkörper (7), für den Fall, dass der Druck auf den Ventilkörper (7) erhöht wird, die Eintrittsöffnung (4) des Durchgangskanals (3) verschließt.

2. Abgabekopf (1) nach Anspruch 1, **dadurch gekennzeichnet, dass** der Ventilkörper (7) mindestens zwei Dichtlippen, eine innere Dichtlippe (7a) und äußere Dichtlippe (7b), umfasst.

3. Abgabekopf (1) nach einem der vorhergehenden Ansprüche, **dadurch gekennzeichnet, dass** die mindestens eine Dichtlippe (7a, 7b), insbesondere die innere Dichtlippe (7a) und äußere Dichtlippe (7b), konzentrisch am Ventilkörper (7) angeordnet sind.

4. Abgabekopf (1) nach einem der vorhergehenden Ansprüche, **dadurch gekennzeichnet, dass** der Ventilkörper (7) und die mindestens eine Dichtlippe (7a, 7b) einstückig ausgebildet sind.

5. Abgabekopf (1) nach einem der vorhergehenden Ansprüche, **dadurch gekennzeichnet, dass** die mindestens eine Dichtlippe (7a, 7b) eine in Richtung der Eintrittsöffnung (4) ausgebildete Höhe von 0,05 bis 1 mm, bevorzugt 0,1 bis 0,5 mm aufweist.

6. Abgabekopf (1) nach einem der vorhergehenden Ansprüche, **dadurch gekennzeichnet, dass** die mindestens eine Dichtlippe (7a, 7b) eine Breite von 0,05 bis 1 mm, bevorzugt 0,1 bis 0,4 mm aufweist.

7. Abgabekopf (1) nach einem der vorhergehenden Ansprüche, **dadurch gekennzeichnet, dass** der Ventilkörper (7) sowie die mindestens eine Dichtlippe (7a, 7b) aus einem thermoplastischen oder elastomeren Kunststoff gebildet sind, insbesondere aus einem Polyolefin, wie z.B. Polyethylen, Polypropylen, Polystyrol oder einem Polyamid, wie z.B. PA6, PA66, PA12.

8. Abgabekopf (1) nach Anspruch 1, **dadurch gekennzeichnet, dass** der Abgabekopf (1) eine Aussparung (10) aufweist, in die der Rahmen (9b) mit Ventilkörper (7) kraft- und/oder formschlüssig eingepasst ist.

9. Abgabekopf (1) nach einem der vorhergehenden Ansprüche, **dadurch gekennzeichnet, dass** das Ventil (6) in einer Aussparung (10) des Abgabekopfs (1) lose aufgenommen ist und in der Aussparung (10) vertikal (v) beweglich ausgebildet ist, wobei bevorzugt der Ventilkörper (7) so bemessen ist, dass das flüssige Präparat (2) zwischen Ventilkörper und einer die Aussparung (10) begrenzenden Wandung durchströmen kann und/oder die Aussparung (10) eine Begrenzung (11) aufweist, die ein vollständiges vertikales (v) Herausführen des Ventils (6) aus der Aussparung (10) verhindert.

10. Abgabekopf (1) nach einem der vorhergehenden Ansprüche, **dadurch gekennzeichnet, dass** der Ventilkörper (7) einen Führungsfortsatz (7c) aufweist, der derart ausgebildet ist, dass er in den Durchgangskanal (3) eingreift und einen kleineren Querschnitt als der Durchgangskanal (3) aufweist.

11. Abgabekopf (1) nach vorhergehendem Anspruch, **dadurch gekennzeichnet, dass** Führungsfortsatz (7c) und Ventilkörper (7) einstückig ausgebildet sind.

12. Abgabevorrichtung (100) zur dosierten Abgabe flüssiger Präparate (2), umfassend
einen Abgabekopf (1) nach einem der vorhergehenden Ansprüche, sowie
ein flexibles Vorratsbehältnis (20),
wobei der Abgabekopf (1) fluidisch dicht auf dem Vorratsbehältnis (20) montiert ist.

13. Abgabevorrichtung (100) nach vorhergehendem Anspruch, **dadurch gekennzeichnet, dass** das flexible Vorratsbehältnis eine mittels Druck betätigbare Quetschflasche ist.

14. Abgabevorrichtung (100) nach einem der beiden vorhergehenden Ansprüche, **dadurch gekennzeichnet, dass** das Vorratsbehältnis (20) aus einem Material, ausgewählt aus der Gruppe bestehend aus thermoplastischen Kunststoffen und elastomeren Kunststoffen, insbesondere aus einem Polyolefin, wie z.B. Polyethylen, Polypropylen, Polystyrol oder einem Polyamid, wie z.B. PA6, PA66, PA12 gebildet ist.

15. Verwendung einer Abgabevorrichtung (100) nach einem der Ansprüche 12 bis 14 zur Bevorratung und/oder dosierten Abgabe von ophthalmischen Produkten, insbesondere Augentropfen; rhinologischen Produkten, insbesondere Nasentropfen, Fluiden, Gelen, Cremes, Pasten, Nahrungsmitteln und Nahrungsergänzungsmitteln.

## Claims

1. A dispensing head (1) for a dispensing device (100) for the metered dispensing of liquid preparations (2), comprising
a through channel (3), which has an inlet opening (4) arranged on the inner side and an outer dispensing opening (5) for liquid preparations, wherein the inlet opening is configured such that it connects an inner space (8) to an outer environment via the through channel (3),
and a valve (6), comprising a valve body (7), which is arranged on the side of the inner space (8) above the inlet opening (4), and the inlet opening (4) is configured to be reversibly closable in a sealing manner from an inner space (8) for the liquid preparation (3),
**characterized in that**
the valve body (7) has at least one sealing lip (7a, 7b) which is formed on a side of the valve body (7) facing the inlet opening (4) and wherein the sealing lip (7a, 7b) is configured such that it seals the inner space (8) from the inlet opening (4) when the valve body (7) closes the inlet opening (4), wherein
the valve (6) comprises a frame (9b) which has at least one fastening element (9a) to which the valve body (7) is fixed, wherein the frame (9b) is secured to the dispensing head (1), wherein preferably the valve body (7), the frame (9b) and the at least one fastening element (9a) are configured in one piece, and
the valve (6) is configured such that the valve body (7), in the event that the pressure on the valve body (7) is increased, closes the inlet opening (4) of the through channel (3).

2. The dispensing head (1) according to claim 1, **characterized in that** the valve body (7) comprises at least two sealing lips, an inner sealing lip (7a) and outer sealing lip (7b).

3. The dispensing head (1) according to any one of the preceding claims, **characterized in that** the at least one sealing lip (7a, 7b), in particular the inner sealing lip (7a) and outer sealing lip (7b), are arranged concentrically on the valve body (7).

4. The dispensing head (1) according to any one of the preceding claims, **characterized in that** the valve body (7) and the at least one sealing lip (7a, 7b) are formed in one piece.

5. The dispensing head (1) according to any one of the preceding claims, **characterized in that** the at least one sealing lip (7a, 7b) has a height in the direction of the inlet opening (4) of 0.05 to 1 mm, preferably 0.1 to 0.5 mm.

6. The dispensing head (1) according to any one of the preceding claims, **characterized in that** the at least one sealing lip (7a, 7b) has a width of 0.05 to 1 mm, preferably 0.1 to 0.4 mm.

7. The dispensing head (1) according to any one of the preceding claims, **characterized in that** the valve body (7) and the at least one sealing lip (7a, 7b) are made from a thermoplastic or elastomeric plastic, in particular from a polyolefin, such as e.g. polyethylene, polypropylene, polystyrene or a polyamide, such as e.g. PA6, PA66, PA12.

8. The dispensing head (1) according to claim 1,
**characterized in that** the dispensing head (1) comprises a recess (10), into which the frame (9b) with the valve body (7) is fitted in a force-fitting and/or form-fitting manner.

9. The dispensing head (1) according to any one of the preceding claims, **characterized in that** the valve (6) is mounted loosely in a recess (10) of the dispensing head (1) and is configured to move vertically (v) in the recess (10), wherein preferably the valve body (7) is dimensioned such that the liquid preparation (2) can flow between the valve body and a wall delimiting the recess (10) and/or the recess (10) has a delimitation (11) which prevents a fully vertical (v) removal of the valve (6) out of the recess (10).

10. The dispensing head (1) according to any one of the preceding claims, **characterized in that** the valve body (7) has a guide extension (7c) which is configured to engage in the through channel (3) and has a smaller cross-section than the through channel (3).

11. The dispensing head (1) according to the preceding claim, **characterized in that** guide extension (7c) and valve body (7) are configured in one piece.

12. A dispensing device (100) for the metered dispensing of liquid preparations (2), comprising
a dispensing head (1) according to any one of the preceding claims, and
a flexible storage container (20),
wherein the dispensing head (1) is mounted in a fluid-tight manner on the storage container (20).

13. The dispensing device (100) according to the preceding claim, **characterized in that** the flexible storage container is a squeeze bottle that can be actuated by pressure.

14. The dispensing device (100) according to any one of the two preceding claims, **characterized in that** the storage container (20) is made from a material selected from the group including thermoplastics and elastomeric plastics, in particular from a polyolefin, such as e.g. polyethylene, polypropylene, polystyrene or a polyamide, such as e.g. PA6, PA66, PA12.

15. Use of a dispensing device (100) according to any one of claims 12 to 14 for the storage and/or metered dispensing of ophthalmic products, in particular eye drops; rhinological products, in particular nose drops, fluids, gels, creams, pastes, foods and food supplements.

## Revendications

1. Tête de distribution (1) pour un dispositif de distribution (100) pour une distribution dosée de préparations liquides (2), comprenant
un canal de passage (3), qui présente une ouverture d'entrée (4) agencée à l'intérieur et une ouverture de distribution extérieure (5) pour des préparations liquides, l'ouverture d'entrée étant conçue de manière à relier un espace intérieur (8) à un environnement extérieur via le canal de passage (3),
ainsi qu'une soupape (6), comprenant un corps de soupape (7), qui est agencé sur le côté de l'espace intérieur (8) au-dessus de l'ouverture d'entrée (4), et l'ouverture d'entrée (4) peut être fermée de manière étanche de manière réversible par rapport à un espace intérieur (8) pour la préparation liquide (3),
**caractérisée en ce que**
le corps de soupape (7) présente au moins une lèvre d'étanchéité (7a, 7b) qui est formée sur un côté du corps de soupape (7) tourné vers l'ouverture d'entrée (4), et la lèvre d'étanchéité (7a, 7b) étant formée de manière à rendre étanche l'espace intérieur (8) par rapport à l'ouverture d'entrée (4) lorsque le corps de soupape (7) ferme l'ouverture d'entrée (4),
la soupape (6) comprenant un cadre (9b) qui dispose d'au moins un élément de fixation (9a) sur lequel le corps de soupape (7) est fixé, le cadre (9b) étant fixé à la tête de distribution (1), le corps de soupape (7), le cadre (9b) et le au moins un élément de fixation (9a) étant de préférence conçus d'une seule pièce, et
la soupape (6) étant conçue de telle sorte que le corps de soupape (7), dans le cas où la pression sur le corps de soupape (7) est augmentée, obture l'ouverture d'entrée (4) du canal de passage (3).

2. Tête de distribution (1) selon la revendication 1, **caractérisée en ce que** le corps de soupape (7) comprend au moins deux lèvres d'étanchéité, une lèvre d'étanchéité intérieure (7a) et une lèvre d'étanchéité extérieure (7b).

3. Tête de distribution (1) selon l'une quelconque des revendications précédentes, **caractérisée en ce que** la au moins une lèvre d'étanchéité (7a, 7b), en particulier la lèvre d'étanchéité intérieure (7a) et la lèvre d'étanchéité extérieure (7b), est agencée de manière concentrique sur le corps de soupape (7).

4. Tête de distribution (1) selon l'une quelconque des revendications précédentes, **caractérisée en ce que** le corps de soupape (7) et la au moins une lèvre d'étanchéité (7a, 7b) sont réalisés d'une seule pièce.

5. Tête de distribution (1) selon l'une quelconque des revendications précédentes, **caractérisée en ce que** la au moins une lèvre d'étanchéité (7a, 7b) présente une hauteur de 0,05 à 1 mm, de préférence de 0,1 à 0,5 mm, formée dans la direction de l'ouverture d'entrée (4).

6. Tête de distribution (1) selon l'une quelconque des revendications précédentes, **caractérisée en ce que** la au moins une lèvre d'étanchéité (7a, 7b) présente une largeur de 0,05 à 1 mm, de préférence de 0,1 à 0,4 mm.

7. Tête de distribution (1) selon l'une quelconque des revendications précédentes, **caractérisée en ce que** le corps de soupape (7) ainsi que la au moins une lèvre d'étanchéité (7a, 7b) sont constitués d'une matière plastique thermoplastique ou élastomère, en particulier d'une polyoléfine, comme par exemple le polyéthylène, le polypropylène, le polystyrène, ou d'un polyamide, comme par exemple PA6, PA66, PA12.

8. Tête de distribution (1) selon la revendication 1, **caractérisée en ce que** la tête de distribution (1) présente un évidement (10) dans lequel le cadre (9b) est ajusté avec le corps de soupape (7) par force et/ou par complémentarité de formes.

9. Tête de distribution (1) selon l'une quelconque des revendications précédentes, **caractérisée en ce que** la soupape (6) est reçue de manière lâche dans un évidement (10) de la tête de distribution (1) et est conçue de manière à être mobile verticalement (v) dans l'évidement (10), le corps de soupape (7) étant de préférence dimensionné de telle sorte que la préparation liquide (2) puisse s'écouler entre le corps de soupape et une paroi délimitant l'évidement (10) et/ou que l'évidement (10) présentant une limitation (11) qui empêche la sortie verticale (v) complète de la soupape (6) hors de l'évidement (10).

10. Tête de distribution (1) selon l'une quelconque des revendications précédentes, **caractérisée en ce que** le corps de soupape (7) présente un prolongement de guidage (7c) qui est conçu de telle sorte qu'il vienne en prise dans le canal de passage (3) et présente une section transversale plus petite que le canal de passage (3).

11. Tête de distribution (1) selon la revendication précédente, **caractérisée en ce que** le prolongement de guidage (7c) et le corps de soupape (7) sont conçus d'une seule pièce.

12. Dispositif de distribution (100) pour une distribution dosée de préparations liquides (2), comprenant
une tête de distribution (1) selon l'une quelconque des revendications précédentes, ainsi
qu'un réservoir de stockage flexible (20),
la tête de distribution (1) étant montée de manière étanche aux fluides sur le réservoir de stockage (20).

13. Dispositif de distribution (100) selon la revendication précédente, **caractérisé en ce que** le réservoir flexible est un flacon à parois souples actionné par pression.

14. Dispositif de distribution (100) selon l'une quelconque des deux revendications précédentes, **caractérisé en ce que** le réservoir de stockage (20) est constitué d'un matériau choisi dans le groupe constitué de matières plastiques thermoplastiques et de matières plastiques élastomères, en particulier d'une polyoléfine, comme par exemple le polyéthylène, le polypropylène, le polystyrène, ou d'un polyamide, comme par exemple PA6, PA66, PA12.

15. Utilisation d'un dispositif de distribution (100) selon l'une quelconque des revendications 12 à 14 pour le stockage et/ou la distribution dosée de produits ophtalmiques, en particulier de gouttes ophtalmiques ; de produits rhinologiques, en particulier de gouttes nasales, de fluides, de gels, de crèmes, de pâtes, d'aliments et de compléments alimentaires.
